# FASCICULE DE BREVET EUROPEEN

(11) **EP 2 330 328 B1**
(45) Date de publication et mention de la délivrance du brevet: **02.04.2014**
(21) Numéro de dépôt: 10192237.5
(22) Date de dépôt: 23.11.2010
(51) Int. Cl.: F16L 33/08

(54) **Collier de serrage pour conduit, conduit qui en est pourvu et procédé de blocage en rotation du collier sur ce conduit**
Klemmring für Leitungen, Leitung mit einem solchen Klemmring sowie Verfahren zur Festsetzung eines solchen Klemmrings auf der Leitung
Clamping ring for tubes, tube being provided with such a clamping ring and method of blocking the rotation of such a clamping ring on a tube

(30) Priorité: 30.11.2009 FR 0905750
(43) Date de publication de la demande: 08.06.2011
(73) Titulaire: HUTCHINSON, 75008 Paris (FR)
(72) Inventeur: Bourdariat, Antoine, 45120, Chalette Sur Loing (FR); Gaa, Jochen, 68307, Mannheim (DE); Caliskan, Alper, 45140, Saint Jean de la Ruelle (FR)
(74) Mandataire: Bolinches, Michel Jean-Marie

(56) Documents cités:
- WO-A1-2007/030059
- FR-A1- 2 882 420
- FR-A1- 2 898 957
- US-A1- 2002 060 453
- US-A1- 2005 052 020
- US-A1- 2008 201 913

## Description

La présente invention concerne un conduit polymérique à raccorder à un embout pour le transport d'un fluide et équipé d'un collier de serrage monté dans une gorge circonférentielle de ce conduit, et un procédé de blocage en rotation de ce collier sur ce conduit. L'invention s'applique en particulier à un conduit d'air chaud sous pression pour véhicule automobile de type en matière plastique et requérant un collier embarqué métallique, tel qu'un conduit de sortie de débitmètre, de refroidisseur d'air de suralimentation (« RAS ») ou de turbocompresseur, à titre non limitatif.

Les colliers de serrage destinés à enserrer un conduit pour son raccord à un embout d'un système de transport de fluide sont généralement constitués d'une bande de serrage métallique équipée d'une cage à vis également métallique formant organe de serrage de ce collier sur une gorge de réception du conduit. Une fois le collier monté dans la gorge, son blocage en rotation par rapport au conduit est généralement assuré par la mise en butée de cette cage contre deux courtes butées axiales faisant saillie vers l'intérieur de la gorge à partir des rebords respectifs de celle-ci.

Un inconvénient majeur du blocage en rotation des colliers de serrage connus réside dans le caractère insuffisant de ce blocage dû à la faible surface de contact entre le collier et le conduit le recevant.

D'autres inconvénients du blocage en rotation de ces colliers résident, d'une part, dans le risque de perçage du conduit en matière plastique par la cage métallique du collier entraînant des fuites potentielles du fluide transporté par ce conduit et, d'autre part, dans la nécessité de prévoir une épaisseur minimale des rebords de gorge dans la zone de mise en butée et de prévoir un resserrage précis du collier lors de son montage. En particulier, on a usuellement recours à de plus grandes épaisseurs de matière plastique en ces rebords pour minimiser leur risque de perçage par la cage ce qui, outre le coût supplémentaire engendré pour la fabrication du conduit, pénalise l'étanchéité du raccordement et également les efforts de montage requis.

Le document FR-A1-2 882 420 enseigne de bloquer en rotation un tel collier de serrage entre deux butées formées sur un seul et même rebord latéral de la gorge le recevant, par l'intermédiaire d'une portion de blocage métallique de forme carrée qui s'étend axialement de manière tangentielle par rapport à la bande de serrage, à partir de la cage de la vis dont elle est solidaire ou distincte.

Le document FR-A1-2 882 420 décrit donc un assemblage d'un conduit polymérique et d'un collier de serrage, ledit conduit polymérique étant destiné à être raccordé à un embout d'un système de transport d'un fluide et comportant une gorge circonférentielle dans laquelle est monté ledit collier de serrage, lequel est destiné à serrer le conduit contre l'embout, la gorge étant délimitée par deux rebords latéraux, dont l'un rebord comporte deux plots en saillie radiale avec lesquels le collier coopère pour son blocage en rotation sur le conduit, le collier comportant: une bande circonférentielle de serrage dont deux extrémités se recouvrent en une zone de recouvrement de la bande présentant deux faces de recouvrement radialement interne et externe, un organe de serrage de la bande monté au contact desdites faces de recouvrement, et un moyen de blocage en rotation étant solidaire de l'organe de serrage et étant apte à bloquer le collier en rotation dans la gorge par mise en butée en rotation d'une portion de butée de ce moyen de blocage contre lesdits plots.

Un inconvénient majeur du collier équipant le conduit selon ce document est que le risque de perçage précité du conduit subsiste, étant donné que le blocage en rotation est obtenu par un contact entre le matériau métallique de cette portion de blocage et les deux butées du rebord de gorge concerné. Un autre inconvénient du blocage réalisé dans ce document réside dans la grande épaisseur de matière plastique requise pour réaliser ces deux butées avec les inconvénients susmentionnés en résultant.

Un but de la présente invention est de proposer un assemblage d'un conduit polymérique et d'un collier de serrage, ledit conduit étant destiné a être raccordé à un embout d'un système de transport d'un fluide et comportant une gorge circonférentielle dans laquelle est monté ledit collier de serrage, lequel est destiné à serrer le conduit contre l'embout, la gorge étant délimitée par deux rebords latéraux comportant chacun un plot en saillie radiale avec lequel le collier coopère pour son blocage en rotation sur le conduit, ce conduit équipé de ce collier remédiant à l'ensemble des inconvénients précités et comportant :
- une bande circonférentielle de serrage dont deux extrémités se recouvrent en une zone de recouvrement de la bande présentant deux faces de recouvrement radialement interne et externe,
- un organe de serrage de la bande monté au contact desdites faces de recouvrement, et
- un moyen de blocage en rotation monté sur l'organe de serrage et apte à bloquer le collier en rotation dans la gorge par mise en butée en rotation d'une portion de butée de ce moyen de blocage contre lesdits plots.

A cet effet, un conduit selon l'invention est tel que ce moyen de blocage, non métallique, prend appui sur ladite face de recouvrement externe et recouvre l'organe de serrage radialement à l'extérieur de cette face, et en ce que ladite portion de butée comporte au moins une paire d'ergots qui s'étendent latéralement dans les directions radiale et axiale et radialement au-dessus de cette face de recouvrement externe, ces deux ergots venant buter contre des faces radiales et axiales de deux dits plots respectivement formés sur les deux rebords de la gorge.

On notera que ce recouvrement de l'organe de serrage par ce moyen de blocage non métallique permet d'éviter tout risque de perçage du conduit polymérique, ce qui permet avantageusement d'utiliser une épaisseur réduite pour le ou chaque rebord de gorge concerné par ce blocage en rotation avec par conséquent un coût de fabrication et des efforts de montage réduits.

On notera également que la portion de butée ainsi formée sur le moyen de blocage permet d'assurer ce blocage en rotation avec une précision et une fiabilité améliorées, en comparaison des conduits connus précités à rebords de gorge incorporant chacun la courte butée axiale précitée, grâce à l'aire supérieure de la surface de contact entre le ou chaque ergot axial selon l'invention et le plot du rebord de gorge correspondant.

De préférence, lesdits ergots axiaux sont en forme d'ailettes sensiblement carrées ou trapézoïdales qui s'étendent chacune dans un plan défini par les directions radiale et axiale de la bande de serrage et qui sont symétriques l'une de l'autre par rapport au plan méridien de cette bande dans la direction circonférentielle.

Il convient de noter que ces deux ergots axiaux, qui sont formés latéralement de part et d'autre du moyen de blocage selon l'invention pour venir buter contre les deux plots en regard des rebords de gorge, procurent ainsi un serrage homogène du collier sur le conduit.

Selon un autre aspect de l'invention, le collier n'est pas fixé de façon permanente au conduit, n'étant ni collé ni soudé sur ce dernier, de sorte que la mise en butée soit exclusivement réalisée par lesdits ergots latéraux.

Selon une autre caractéristique préférentielle de l'invention, le moyen de blocage est monté par clipage sur l'organe de serrage formé d'une cage à vis. Avantageusement, ce moyen de blocage comporte une portion de clipage qui vient se cliper sur une surface convexe de la cage sensiblement en arc de cylindre et définissant une partie radialement externe de cet organe.

Encore plus avantageusement, ladite portion de clipage peut être formée en une extrémité du moyen de blocage destinée à être adjacente à la tête de la vis, et présente une forme de U inversé à deux lèvres déformables de clipage. Cette portion de clipage peut être séparée de ladite paire d'ergots axiaux par une paire d'entailles assurant le découplage mécanique de cette portion de clipage d'avec ladite portion de butée.

Selon une autre caractéristique de l'invention, le moyen de blocage peut comporter en outre, en son autre extrémité destinée à être adjacente au bout de tige de la vis, une portion d'immobilisation dans la direction circonférentielle qui est apte à immobiliser ce moyen de blocage par rapport à l'organe de serrage en venant buter contre ce bout de tige.

Selon une autre caractéristique de l'invention, le moyen de blocage peut être constitué d'un couvercle ou capot réalisé d'un seul tenant en un matériau plastique, de préférence en un matériau thermoplastique moulé par injection.

Un procédé de blocage en rotation selon l'invention d'un collier de serrage sur un conduit polymérique dans un assemblage tel que défini ci-dessus et destiné à être raccordé à un embout d'un système de transport d'un fluide, comprend les étapes suivantes :
a) on positionne dans la gorge ladite bande de serrage munie dudit organe de serrage en réglant le serrage de cette bande par la manoeuvre de cet organe, puis
b) on monte de préférence par clipage ledit moyen de blocage non métallique sur cet organe pour que lesdits ergots latéraux viennent respectivement buter contre lesdits plots latéraux tout en recouvrant cet organe radialement à l'extérieur de ladite face de recouvrement radialement externe.

Avantageusement, l'on peut immobiliser dans la direction circonférentielle à l'étape b) ledit moyen de blocage par rapport à l'organe de serrage, par une mise en butée d'une tige de vis que comprend cet organe.

D'autres caractéristiques, avantages et détails de la présente invention ressortiront à la lecture de la description suivante d'un exemple de réalisation de l'invention, donné à titre illustratif et non limitatif, la description étant réalisée en référence avec les dessins joints, parmi lesquels :
la figure 1 est une vue en perspective éclatée d'un collier de serrage selon l'invention sur lequel ledit moyen de blocage est conçu pour être rapporté après montage de collier sur un conduit de raccordement (représenté partiellement),
la figure 2 est une vue en perspective assemblée du collier de serrage de la figure 1 monté sur ce même conduit et incorporant ce moyen de blocage,
la figure 3 est une vue de face du conduit de la figure 2 équipé de ce collier de serrage selon l'invention, et
la figure 4 est une vue en coupe axiale suivant le plan IV-IV de la figure 3 de ce conduit équipé de ce collier de serrage.

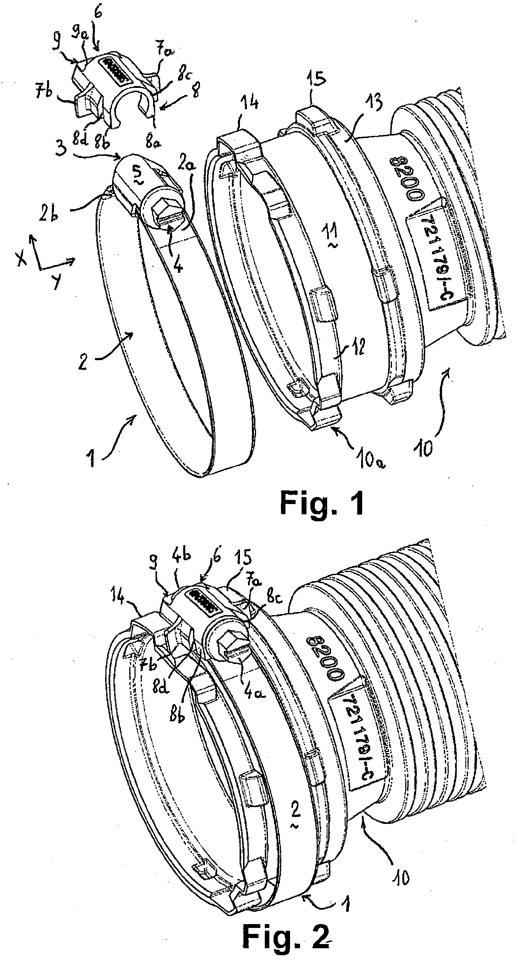

Le collier 1 illustré à la figure 1 est destiné à serrer un conduit polymérique 10, par exemple réalisé en un matériau thermoplastique soufflé, contre un embout de raccordement (non illustré) d'un système de transport de fluide, tel que de l'air chaud sous pression en sortie d'un débitmètre, d'un refroidisseur d'air de suralimentation (« RAS ») ou d'un turbocompresseur, par exemple.

Ce collier 1 comporte de manière connue une bande de serrage annulaire 2 souple et métallique dont une extrémité 2a est pourvue d'un organe de serrage 3 également métallique, lequel est conçu pour recevoir une longueur variable de l'autre extrémité 2b de la bande 2 de sorte à réduire ou à augmenter le diamètre de la bande 2 par actionnement de cet organe de serrage 3 dans un sens ou dans l'autre, respectivement. Comme visible à la figure 1, les deux extrémités de bande 2a et 2b se recouvrent ainsi mutuellement en une zone de recouvrement présentant une face radialement externe définie par l'extrémité de bande 2a et une face radialement interne définie par l'extrémité de bande 2b. L'organe de serrage 3 est dans cet exemple formé d'une cage à vis comprenant une vis 4 s'étendant tangentiellement à la bande 2 et logée dans une enveloppe 5 sensiblement hémicylindrique formant la cage.

Le conduit souple 10 globalement tubulaire qui est illustré à la figure 1 comporte, à l'une au moins de ses extrémités 10a, une gorge 11 de réception du collier de serrage 1 qui est adaptée pour le positionner axialement en un emplacement circonférentiel du conduit 10 via deux rebords ou collerettes circonférentielles 12 et 13 délimitant axialement la gorge 11. Chaque rebord latéral 12, 13 est pourvu d'au moins un plot 14, 15 par exemple sensiblement parallélépipédique ou de section trapézoïdale qui est en saillie radialement vers l'extérieur, et dont une face axiale (définie par les deux directions radiale X et axiale Y) est destinée à servir de butée au collier 1 dans la direction circonférentielle, comme expliqué ci-après.

A cet effet, le collier 1 comporte un capot ou couvercle 6 pour son blocage en rotation sur le conduit 10, que l'on monte sur l'organe de serrage 3 du collier 1 après positionnement de celui-ci avec le serrage souhaité dans la gorge 11 du conduit 1. Le capot 6 est de préférence réalisé d'un seul tenant en un matériau thermoplastique moulé par injection (comme par exemple un polypropylène ou un polyamide), et on le clipe sur la cage 5 du collier 1 en prenant appui sur la bande 2, de sorte que ce capot 6 vienne recouvrir cette cage 5 et assure lui-même, par deux ergots axiaux 7a et 7b qu'il présente, ce blocage en rotation contre les deux plots en regard 14 et 15 formant butées des rebords de gorge 12 et 13. Plus précisément et comme visible aux figures 1 à 3, le capot 6 présente essentiellement, de l'une de ses extrémités à l'autre (dans la direction circonférentielle) :
- une portion de clipage 8 qui est destinée à être montée adjacente à la tête de la vis 4 et qui présente une forme de U inversé à deux lèvres déformables de clipage 8a et 8b,
- une portion de butée sensiblement médiane pour le capot 6, qui comprend les deux ergots 7a et 7b par exemple en forme d'ailettes trapézoïdales s'étendant latéralement en étant symétriques l'une de l'autre par rapport au plan circonférentiel médian de la bande 2 et du capot 6, et qui est séparée des lèvres de clipage 8a et 8b par deux entailles respectives 8c et 8d assurant le découplage mécanique de la portion de clipage 8 d'avec la portion de butée 7a, 7b, et
- une portion d'immobilisation 9 dans la direction circonférentielle qui est destinée à être adjacente au bout de tige 4b de la vis 4 (opposé à sa tête 4a), et qui est apte à immobiliser le capot 6 sur la cage à vis 3 en venant buter contre ce bout de tige 4b.

Comme illustré à la figure 1, les deux lèvres de clipage 8a et 8b définissent entre elles une largeur axiale minimale pour le capot 6 de sorte à l'enserrer efficacement, en comparaison de la largeur du capot 6 - sensiblement constante - mesurée au-delà des entailles 8c et 8d (tant en deçà qu'au-delà des ergots 7a et 7b).

Comme illustré à la figure 2, les deux ergots 7a et 7b permettent de procurer une surface d'arrêt en rotation contre les butées 14 et 15 respectives des rebords 14 et 15 du conduit 10 qui est augmentée, en comparaison des surfaces d'arrêt de l'art antérieur.

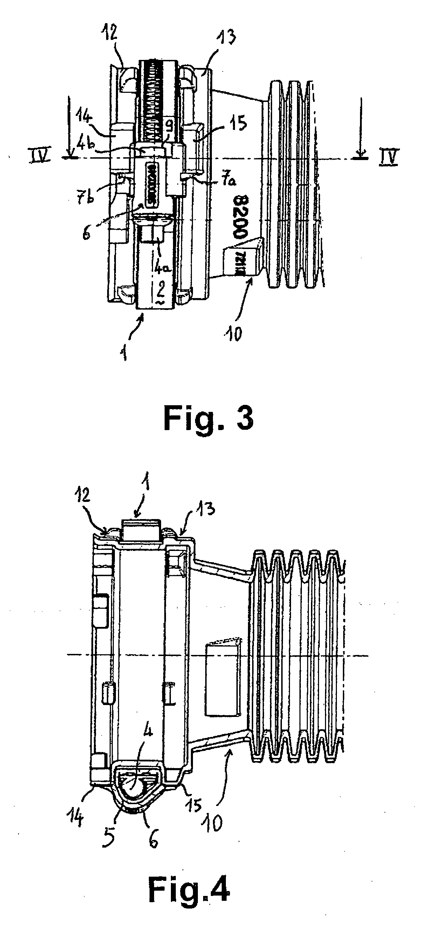

Quant à la portion d'immobilisation 9, on voit à la figure 3 qu'elle est formée d'un orifice traversant 9a que présente le capot 6 dans la direction X de son épaisseur radiale et qui est traversé par ce bout 4b de la vis 4, lequel bout 4b débouchant à l'extrémité du capot 6 par l'orifice 9a permet de caler ce capot 6 du fait qu'il vient buter contre le bord de cet orifice 9a.

En résumé, ce capot 6 selon l'invention permet d'assurer un blocage en rotation très satisfaisant du collier 1 sur le conduit 10 sans risquer de percer ce dernier du fait de la mise en butée en rotation qui est exclusivement réalisée par la matière plastique du capot 6 recouvrant l'organe de serrage 3, ce qui permet d'utiliser des épaisseurs moindres de matière pour les rebords de gorge 12 et 13. De plus, ce capot 6 ne dégrade pas les performances de serrage du collier 1, le couple de serrage étant intégralement transmis au conduit 10 et à l'embout qu'il raccorde. Enfin, on peut noter que ce capot 6 permet d'augmenter les tolérances de resserrage du collier 1 en comparaison des colliers de l'art antérieur.

D'une manière générale, on notera par ailleurs que la ou chaque portion de butée 7a, 7b du moyen 6 de blocage en rotation (i.e. dans l'exemple illustré chaque ergot 7a, 7b du capot 6) est formée radialement au-dessus de la face de recouvrement externe de la bande 2 du collier 1 selon l'invention, et que ce dernier n'est pas fixé de façon permanente au conduit 10 (i.e. sans collage ni soudage).

## Revendications

1. Assemblage d'un conduit (10) polymérique et d'un collier de serrage (1), ledit conduit polymérique étant destiné à être raccordé à un embout d'un système de transport d'un fluide et comportant une gorge circonférentielle (11) dans laquelle est monté ledit collier de serrage, lequel est destiné à serrer le conduit contre l'embout, la gorge étant délimitée par deux rebords latéraux (12 et 13) comportant chacun un plot (14 et 15) en saillie radiale avec lequel le collier coopère pour son blocage en rotation sur le conduit, le collier comportant :
- une bande circonférentielle de serrage (2) dont deux extrémités (2a et 2b) se recouvrent en une zone de recouvrement de la bande présentant deux faces de recouvrement radialement interne et externe,
- un organe de serrage (3) de la bande monté au contact desdites faces de recouvrement, et
- un moyen de blocage en rotation (6) monté sur l'organe de serrage (3) et apte à bloquer le collier (1) en rotation dans la gorge (11) par mise en butée en rotation d'une portion de butée (7a, 7b) de ce moyen de blocage (6) contre lesdits plots (14 et 15),
ce moyen de blocage (6) étant non métalique, prenant appui sur ladite face de recouvrement externe et recouvrant l'organe de serrage (3) radialement à l'extérieur de cette face, ladite portion de butée comportant au moins une paire d'ergots axiaux (7a et 7b) qui s'étendent latéralement de part et d'autre du moyen de blocage (6) dans un plan défini par les directions radiale (X) et axiale (Y) et radialement au-dessus de cette face de recouvrement externe, ces deux ergots (7a, 7b) venant buter contre des faces axiales, c'est à dire définies par les deux directions radiale (X) et axiale (Y), desdits deux plots (14 et 15) respectivement formés sur les deux rebords (12, 13) de la gorge (11).

2. Assemblage selon la revendication 1, **caractérisé en ce que** lesdits ergots (7a et 7b) sont en forme d'ailettes sensiblement carrées ou trapézoïdales qui sont symétriques l'une de l'autre par rapport au plan méridien de ladite bande (2) du collier (1) dans la direction circonférentielle.

3. Assemblage selon la revendication 1 ou 2, **caractérisé en ce que** le collier (1) n'est pas fixé de façon permanente au conduit (10), n'étant ni collé ni soudé sur ce dernier, de sorte que ladite mise en butée soit exclusivement réalisée par lesdits ergots (7a et 7b).

4. Assemblage selon une des revendications précédentes, **caractérisé en ce que** le moyen de blocage (6) est monté par clipage sur l'organe de serrage (3).

5. Assemblage selon la revendication 4, l'organe de serrage (3) étant formé d'une cage (5) à vis (4), **caractérisé en ce que** le moyen de blocage (6) comporte une portion de clipage (8) qui vient se cliper sur une surface convexe de la cage (5) sensiblement en arc de cylindre et définissant une partie radialement externe de l'organe de serrage (3).

6. Assemblage selon la revendication 5, **caractérisé en ce que** ladite portion de clipage (8) est formée en une extrémité du moyen de blocage (6) destinée à être adjacente à la tête (4a) de la vis (4), et présente une forme de U inversé à deux lèvres déformables de clipage (8a et 8b).

7. Assemblage selon la revendication 6, **caractérisé en ce que** ladite portion de clipage (8) est séparée de ladite paire d'ergots axiaux (7a et 7b) par deux entailles (8c et 8d) assurant lé découplage mécanique de cette portion de clipage d'avec ladite portion de butée (7a, 7b).

8. Assemblage selon la revendication 6 ou 7, **caractérisé en ce que** le moyen de blocage (6) comporte en outre, en son autre extrémité destinée à être adjacente au bout de tige (4b) de la vis (4), une portion d'immobilisation (9) dans la direction circonférentielle qui est apte à immobiliser ce moyen de blocage par rapport à l'organe de serrage (3) en venant buter contre ce bout de tige.

9. Assemblage selon une des revendications précédentes, **caractérisé en ce que** le moyen de blocage (6) est constitué d'un couvercle ou capot réalisé d'un seul tenant en un matériau plastique, de préférence en un matériau thermoplastique moulé par injection.

10. Procédé de blocage en rotation, dans un assemblage selon une des revendications 1 à 9, du collier de serrage (1) sur le conduit (10) polymérique destiné à être raccordé à un embout d'un système de transport d'un fluide, **caractérisé en ce qu'**il comprend les étapes suivantes :
a) on positionne dans la gorge ladite bande de serrage (2) munie dudit organe de serrage (3) en réglant le serrage de cette bande (2) par la manoeuvre de cet organe (3), puis
b) on monte de préférence par clipage ledit moyen de blocage (6) non métallique sur cet organe (3) pour que lesdits ergots (7a et 7b) viennent respectivement buter contre lesdits plots (14 et 15) tout en recouvrant cet organe (3) radialement à l'extérieur de ladite face de recouvrement radialement externe.

11. Procédé selon la revendication 10, **caractérisé en ce que** l'on immobilise dans la direction circonférentielle à l'étape b) ledit moyen de blocage (6) par rapport audit organe de serrage (3), par une mise en butée d'une tige de vis (4) que comprend cet organe.

## Patentansprüche

1. Anordnung aus einer Polymerleitung (10) und einer Klemmschelle (1), wobei die Polymerleitung dazu bestimmt ist, an einem Anschlussstück eines Transportsystems für ein Fluid angeschlossen zu werden und eine Umfangskehle (11) umfasst, in welcher die Klemmschelle angebracht ist, welche dazu bestimmt ist, die Leitung gegen das Ansatzstück zu klemmen, wobei die Kehle begrenzt ist durch zwei seitliche Ränder (12 und 13), welche jeweils einen radial hervorstehenden Block (14 und 15) umfassen, mit welchem die Schelle für ihre Blockierung bezüglich einer Rotation auf der Leitung zusammenwirkt, wobei die Schelle umfasst:
- ein Umfangsklemmband (2), von welchem zwei Enden (2a und 2b) sich in einer Überdeckungszone des Bandes überdecken, welche zwei, radial innere und äußere, Überdeckungsflächen aufweist,
- ein Element (3) zum Spannen des Bandes, welches im Kontakt mit den Überdeckungsflächen angebracht ist, und
- ein Rotationsblockierungsmittel (6), welches an dem Spannelement (3) angebracht ist und dazu ausgestaltet ist, die Schelle (1) durch Einsatz eines Abschnitts für einen Anschlag (7a, 7b) dieses Blockierungsmittels (6) an den Blöcken (14 und 15) bezüglich einer Rotation in der Kehle (11) zu blockieren,
wobei dieses Blockierungsmittel (6) nicht metallisch ist, an der äußeren Überdeckungsfläche gestützt ist und das Spannelement (3) radial zu der Außenseite dieser Fläche überdeckt, wobei der Anschlagabschnitt wenigstens ein Paar von axialen Nocken (7a und 7b) umfasst, welche sich seitlich auf beiden Seiten des Blockierungsmittels (6) in einer Ebene, welche definiert ist durch die radiale (X) und axiale (Y) Richtung, und radial über dieser äußeren Überdeckungsfläche erstrecken, wobei diese zwei Nocken (7a, 7b) an Flächen der zwei Blöcke (14, 15) in Anschlag kommen, welche axial sind, d.h. durch die radiale (X) und axiale (Y) Richtung definiert sind, und jeweils an den zwei Rändern (12, 13) der Kehle (11) ausgebildet sind.

2. Anordnung nach Anspruch 1, **dadurch gekennzeichnet, dass** die Nocken (7a und 7b) in Form von quadratischen oder trapezförmigen Flügeln sind, welche bezüglich der Meridianebene des Bandes (2) der Schelle (1) in der Umfangsrichtung zueinander symmetrisch sind.

3. Anordnung nach Anspruch 1 oder 2, **dadurch gekennzeichnet, dass** die Schelle (1) nicht auf permanente Weise an der Leitung (10) befestigt ist, wobei sie weder an der letzteren angeklebt, noch angeschweißt ist, sodass das in Anschlag Bringen ausschließlich durch die Nocken (7a und 7b) realisiert wird.

4. Anordnung nach einem der vorhergehenden Ansprüche, **dadurch gekennzeichnet, dass** das Blockierungsmittel (6) durch Einklippen an dem Spannelement (3) angebracht ist.

5. Anordnung nach Anspruch 4, wobei das Spannelement (3) gebildet ist durch ein Gehäuse (5) mit Schraube (4), **dadurch gekennzeichnet, dass** das Blockierungsmittel (6) einen Klippabschnitt (8) umfasst, welcher an einer konvexen Oberfläche des Gehäuses (5) eingeklippt wird, welche im Wesentlichen in Form eines Zylinderbogens ist und einen radial äußeren Abschnitt des Spannelements (3) definiert.

6. Anordnung nach Anspruch 5, **dadurch gekennzeichnet, dass** der Klippabschnitt (8) gebildet ist an einem Ende des Blockierungsmittels (6), welches dazu bestimmt ist, benachbart zu dem Kopf (4a) der Schraube (4) zu sein und eine umgekehrte U-Form mit zwei verformbaren Klipplippen (8a und 8b) aufweist.

7. Anordnung nach Anspruch 6, **dadurch gekennzeichnet, dass** der Klippabschnitt (8) von dem Paar von axialen Nocken (7a und 7b) getrennt ist durch zwei Einschnitte (8c und 8d), welche die mechanische Entkopplung dieses Klippabschnitts von dem Anschlagabschnitt (7a, 7b) gewährleisten.

8. Anordnung nach Anspruch 6 oder 7, **dadurch gekennzeichnet, dass** das Blockierungsmittel (6) außerdem an seinem anderen Ende, welches dazu bestimmt ist, benachbart zu dem Schaftende (4b) der Schraube (4) zu sein, einen Abschnitt zur Immobilisierung (9) in der Umfangsrichtung umfasst, welcher dazu ausgestaltet ist, dieses Blockierungsmittel bezüglich dem Spannelement (3) zu immobilisieren, indem es gegen dieses Schaftende in Anschlag kommt.

9. Anordnung nach einem der vorhergehenden Ansprüche, **dadurch gekennzeichnet, dass** das Blockierungsmittel (6) gebildet ist durch eine Abdeckung oder eine Kappe, welche aus einem einzigen Stück aus Kunststoffmaterial, bevorzugt aus einem spritzgeformten thermoplastischen Material, realisiert ist.

10. Verfahren, in einer Anordnung nach einem der Ansprüche 1 bis 9, zur Rotationsblockierung der Klemmschelle (1) an der Polymerleitung (10), welche dazu bestimmt ist, an einem Ansatzstück eines Transportsystems für ein Fluid angeschlossen zu werden, **dadurch gekennzeichnet, dass** es die folgenden Schritte umfasst:
a) in der Kehle wird das Klemmband (2) positioniert, welches mit dem Spannelement (3) versehen ist, wobei die Spannung dieses Bandes (2) durch Betätigung dieses Elements (3) eingestellt wird, dann
b) wird bevorzugt durch Einklemmen das nicht metallische Blockierungsmittel (6) an diesem Element (3) angebracht, sodass die Nocken (7a und 7b) jeweils gegen die Blöcke (14 und 15) in Anschlag kommen, wobei dieses Element (3) radial auf der Außenseite der radial äußeren Überdeckungsfläche überdeckt wird.

11. Verfahren nach Anspruch 10, **dadurch gekennzeichnet, dass** in der Umfangsrichtung beim Schritt b) das Blockierungsmittel (6) bezüglich des Spannelements (3) immobilisiert wird durch ein in Anschlag Bringen eines Schraubenschafts (4), welchen dieses Element umfasst.

## Claims

1. Assembly of a polymer duct (10) and of clamping collar (1), said polymer duct being designed to be connected to a nozzle of a system for transportation of a fluid and comprising a circumferential groove (11) into which is mounted said clamping collar, which is designed to clamp the duct against the nozzle, the groove being delimited by two lateral rims (12 and 13) each comprising a radially projecting stud (14 and 15) with which the collar cooperates to be blocked rotation-wise on the duct, the collar comprising :
- a circumferential clamping strip (2), two ends (2a and 2b) of which overlap in an overlap region of the strip having two radially internal and external overlapping faces,
- a strip clamping member (3) mounted in contact with said overlapping faces, and
- a rotation blocking means (6) mounted on the clamping member (3) and capable of blocking the rotation of the collar (1) in the groove (11) by the rotational abutment of an abutment portion (7a, 7b) of this blocking means (b) against said studs (14 and 15),
this blocking means being non-metallic, bearing on said external overlapping face and covering the clamping member (3) radially outside this face, said abutment portion comprising at least one pair of axial fins (7a and 7b) which laterally extend on either side of the blocking means (6) in a plane defined by the radial (X) and axial (Y) directions and radially above this external overlapping face, these two fins (7a, 7b) abutting against axial faces, namely defined by both radial (X) and axial (Y) directions, of said two studs (14 and 15) respectively formed on both rims (12, 13) of the groove (11).

2. Assembly according to Claim 1, **characterized in that** said fins (7a and 7b) are in the form of substantially square or trapezoidal wings, which are symmetrical to one another in relation to the meridian plane of said strip (2) of the collar (1) in the circumferential direction.

3. Assembly according to claim 1 or 2, **characterized in that** the collar (1) is not fixed permanently to the duct (10), being not glued nor welded to this duct, so that said abutment is exclusively performed by said fins (7a and 7b).

4. Assembly according to one of the preceding claims, **characterized in that** the blocking means (6) is clipped onto the clamping member (3).

5. Assembly according to Claim 4, the clamping member (3) being formed by a cage (5) with a screw (4), **characterized in that** the blocking means (6) comprises a clipping portion (8) which is clipped onto a convex surface of the cage (5) substantially in the form of an arc of cylinder, and defining a radially external part of the clamping member (3).

6. Assembly according to Claim 5, **characterized in that** said clipping portion (8) is formed at one end of the blocking means (6), which end is intended to be adjacent to the head (4a) of the screw (4), and has an inverted U shape with two deformable clipping lips (8a and 8b).

7. Assembly according to Claim 6, **characterized in that** said clipping portion (8) is separated from said pair of axial fins (7a and 7b) by two notches (8c and 8d) ensuring the mechanical decoupling of this clipping portion with said abutment portion (7a, 7b).

8. Assembly according to Claim 6 or 7, **characterized in that** the blocking means (6) also includes, at its other end intended to be adjacent to the stem end (4b) of the screw (4), an immobilization portion (9) in the circumferential direction which is capable of immobilizing this blocking means relative to the clamping member (3) by abutting against this stem end.

9. Assembly according to one of the preceding claims, **characterized in that** the blocking means (6) consists of a lid or cover produced in a single piece in a plastic material, preferably in an injection-molded thermoplastic material.

10. Method for blocking the rotation, in an assembly according to one of claims 1 to 9, of the clamping collar (1) on the polymer duct (10) intended to be connected to a nozzle of a fluid transport system, **characterized in that** it comprises the following steps:
a) said clamping strip (2) provided with said clamping member (3) is positioned in the groove by adjusting the tightness of this strip (2) by operating this member (3), then
b) said non-metallic blocking means (6) is fitted, preferably clipped, onto this member (3) so that said fins (7a and 7b) respectively abut against said studs (14 and 15) while covering this member (3) radially outside said radially external overlapping face.

11. Method according to Claim 10, **characterized in that**, in the step b), said blocking means (6) is immobilized in the circumferential direction relative to said clamping member (3), by an abutment of a screw stem (4) that this member includes.
